# EUROPEAN PATENT APPLICATION

(11) **EP 2 043 333 A1**
(43) Date of publication of application: **01.04.2009**
(21) Application number: 07291162.1
(22) Date of filing: 27.09.2007
(51) Int. Cl.: H04L 29/12

(54) **A method for accessing a server, corresponding portable device and system**

(71) Applicant: Axalto S.A., 92190 Meudon (FR)
(72) Inventor: Aussel, Jean-Daniel, 92190 Meudon (FR); Smadja, Philippe, 92190 Meudon (FR)
(74) Representative: Cour, Pierre

(57) **Abstract**

The invention relates to a method for accessing a server, the server being accessible from a host device (11), the host device implementing a network communication stack, a portable device (12) being connected to the host device.

According to the invention, the network communication stack is modified for at least one name resolution for at least one network server address, so that the name resolution allows to point to the portable device, as the server, the host device being able to exchange network data with the portable device, without the use of any dedicated port to access the portable device.

The invention relates also to a corresponding electronic portable device (12) for accessing a server (12) and a corresponding system for accessing a server including a portable device and a host device cooperating with said portable device.

## Description

### Field of the invention:

The invention relates, in a general manner, to a method for accessing a server.

The invention also relates to a system for accessing a server.

Moreover, the invention relates to a portable device for accessing a server, as a network entity.

### State of the art :

It is known to incorporate a server within a portable device, like a TCP/IP (acronyms for "Transport Control Protocol/ Internet Protocol") smart card. The TCP/IP smart card is inserted within a reader of a personal computer, as a host device, in order to cooperate with the host device. A user may benefit from such a cooperation between the host device and the portable device, to access one or several services offered by the server accessible from the host device. The portable device is seen from the host device as a network node, like, for example, an Internet node with the TCP/IP smart card. Data are exchanged between the host device, as one network entity, as client, and the portable device, as another network entity, as server. To exchange data, the host device executes a gateway application to act as a proxy server, at the host device side of the system made up by the portable device and the host device.

It is to be recalled that the role of the proxy server generally consists of sending and/or receiving data on behalf of the client of the portable device, in order to possibly limit the access to and/or from the portable device by forwarding the considered data (while not modifying it).

One disadvantage of the just hereinabove described solution is that, in such a case, the exchange of data between the portable device and the host device needs that the gateway application has to listen on one dedicated IP port, which may be not available, i.e. already used by another application.

Another disadvantage of such a known solution is that the host device is not able to exchange data with several portable devices connected to the host device, since one portable device is not distinguishable from another portable device. As a matter of fact, two different portable devices connected to the host device would not be able to use one and the same dedicated IP port to discuss with any individual and separate portable device amongst them. Thus, the user is obliged to remove one portable device from the host device, in order to be sure to discuss with the desired one.

### Summary of the invention :

The invention eliminates such disadvantages by providing a method for accessing a server that is accessible from a host device that implements a network communication stack.

According to the invention, the network communication stack is modified for one or several name resolutions for one or several network server addresses, so that the name resolution allows to point to the portable device. Due to a use of a name identifying the portable device, for example instead of any other distant server connected to the host device through the network, the host device is able to communicate network data with the portable device, as a local server.

The principle of the invention is, therefore, that the host device is, during the implementation of the communication protocol, through a change of the name, to identify, in a unique manner, as the network entity to be found, the portable device itself. Thus, the host device will access, in a dynamic manner, the portable device. Accordingly, data that are sent from the host device will be, further to the change of the name, re-directed to the portable device.

It is to be recalled that the expression "name resolution" means a process of finding a network entity that an identifier used in a certain context refers to.

It is to be noted that the portable device plays the role of a server, as being the recipient of a request transmitted by its originator, the host device, as client.

Accordingly, there is no need of any gateway application executed by the host device, and thus, no need of any dedicated network port, to communicate data with the portable device.

Furthermore, due to the use of an identifier that is unique and peculiar to each portable device, and, therefore, not shared by several portable devices, the host device communicates data with the portable device identified by its own name without needing to remove any other (non-directed) portable device.

According to another aspect, the invention is a system for accessing a server, as a first network entity. The server is accessible from a host device, as a second network entity. The host device comprises means for implementing a network communication stack. A portable device is connected to the host device. The system includes the portable device and the host device.

According to the invention, the system is configured to modify a name resolution for at least one network server address while implementing the network communication stack, so that the name resolution allows to point to the portable device, as server, the host device comprising means for exchanging network data with the portable device.

As host device, it can be a user device like, for example, a mobile telephone, a PDA (acronym for "Personal Digital Assistant"), a personal computer, or a mobile laptop.

According to a further aspect, the invention is a portable device for accessing a server, as a network entity. The server is accessible from outside.

According to the invention, the portable device is configured to modify a name resolution for at least one network server address, so that the name resolution allows to point to the portable device, as server, the portable device comprising means for exchanging network data with outside.

As portable device, it can be any electronic device that a user can carry and comprises at least one microprocessor and at least one memory or being connected to at least one memory. For example, it can constitute a SIM (acronym for "Subscriber Identity Module") card, a smart card, a personal token or a dongle of the USB (acronym for "Universal Serial Bus") type which does not need any specific reader to communicate with a host device.

### Brief description of the drawings:

Additional features and advantages of the invention will be more clearly understandable after reading a detailed description of one single preferred embodiment, given as an indicative and not limitative example, in conjunction with the following drawings:
- Figure 1 illustrates a simplified diagram of an embodiment of a system comprising a personal computer and a smart card being adapted to provide an access to a server according to the invention; and
- Figure 2 is a flow chart of an exemplifying method for accessing a server implemented by the system of figure 1.

### Detailed description of one embodiment:

Herein under is considered a case in which the invention method for accessing a server, as a first network entity, accessible from a personal computer, as a second network entity, to which a smart card is connected. However, it is only for exemplifying purposes and is not considered to reduce the scope of the present invention.

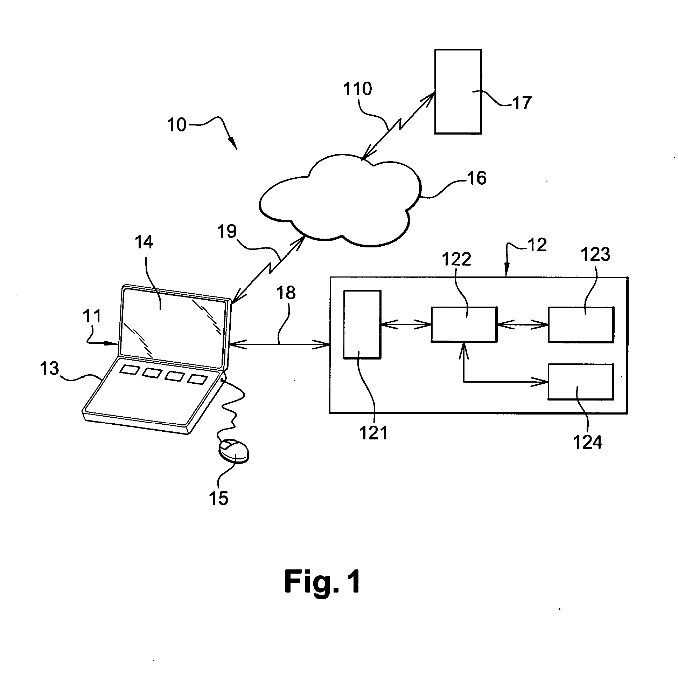

Figure 1 shows an electronic system 10 comprising a personal computer 11, as a host device, and a TCP/IP smart card 12 or the like.

The TCP/IP smart card 12 is inserted within a hardware element, like a USB bus or a smart card reader or the like, compliant with an Input/Output interface comprised within the TCP/IP smart card 12. The hardware element is itself connected to the personal computer 11. The TCP/IP smart card 12 includes an Input/Output interface 121, a microprocessor 122, and several memories 123 and 124.

The Input/Output interface 121 with contact and/or without any contact (via an antenna, an infrared link, Bluetooth, and/or the like) allows to communicate data to and/or from the microprocessor 122 with at least one external electronic entity, like the personal computer 11. The Input/Output interface 121 is connected to the personal computer 11, through a bi-directional link 18. The TCP/IP smart card 12 is thus able to cooperate with the personal computer 11.

The microprocessor 122 processes, controls and communicates data with all the different other electronic components incorporated within the TCP/IP smart card 12, such as memories 123 and 124, to read data from them and/or to write data into them.

The memories 123 and 124 include volatile and non volatile memories, to store data and/or application(s). The memory 123 is accessible from the personal computer 11 at least in part only when the TCP/IP smart card 12 is accessed as being a local server. The other memory 124 and/or the other part of the memory 123 is accessible from the personal computer 11 when the TCP/IP smart card 12 is accessed as being a memory storing a certain type of file(s), like an audio and/or video file(s), for example of MP3 format.

The personal computer 11 includes all the electronic components, like a central unit, volatile and non volatile memories, and so on (not shown), that are necessary to operate.

A user accesses the personal computer 11 through a man machine interface, in order to be able to exploit, at least in part, one or several services accessible through the personal computer 11. The user interacts with the man machine interface and operates the personal computer 11. The man machine interface comprises a keypad 13 to enter typing information, a display 14 to view information, and a pointer 15 to point and/or select information, like a mouse, a loudspeaker and a microphone.

The personal computer 11 is equipped with a modem (not shown) to communicate data, through an Internet network 16, via bi-directional lines 19 and 110 with one or several remote servers 17. Other remote servers (not shown) can be accessible from the personal computer 11 through other link(s). For instance, a server within a computer is accessible from the personal computer 11 through a short range radiofrequency link, like Bluetooth, or a server within a mobile phone through an infrared ray interface.

The communications within the network are made by implementing communication protocols that are in compliance with one or several standards.

As known per se, the communication standard within the Internet network, or the like, comprises five stacked layers peculiar to such a type of network. A communication protocol is selected according to the desired application, like for example interrogation of web pages, transfer of files, electronic mail, forum or news, and so on. A given layer offers one or several services to an upper layer and requires services from a lower layer. Among the five layers, from bottom to top, there are a physical layer, a data link layer ("PPP", "slip", and so on), a network addressing layer ("IP"), a transport layer ("TCP"), and an application layer ("http", "ftp", "e-mail", "streaming video", "voice over IP" and so on). The network addressing layer and the transport layer are implemented through some libraries of specific functions or some network libraries with which they communicate. When the network is Internet, these layers are implemented with a socket library. Such an organization allows a web browser to create a request to access a server, e.g. to consult "Web" pages (http protocol), to transfer files (ftp protocol), to transmit electronic mails (e-mail protocol) relating to the network access, and so on. As known by a man skilled in the art, the web browser is a software application integrating or relying on a web protocol stack that enables a user to display and interact with documents hosted by web servers or held in a file system. Documents can be in different formats, such as HTML, XML, and so on.

According to an interesting feature of the invention, the TCP/IP smart card 12 comprises means for modifying a name resolution for one or several Internet server addresses, while the personal computer 11 implements an Internet protocol stack, so that data is re-directed to the TCP/IP smart card 12, as local server, for certain predetermined Internet server address(es).

The TCP/IP smart card 12 becomes a server, thus providing one or several server applications. The TCP/IP smart card 12 is rendered accessible as an Internet node, for Internet client(s).

A portable network application, like a portable Internet browser, is embedded within the TCP/IP smart card 12. Furthermore, additional security features, like challenge, authentication and/or signature process(es), can be provided within the TCP/IP smart card 12. For example, the server challenges the client by using an authentication algorithm, and conversely.

No additional TCP/IP communication stack executed on the personal computer 11, as host device, is needed to re-route the IP data packets to the TCP/IP smart card 12, as portable device.

There is no need of a network configuration that requires administrative privileges.

A detection of a predetermined URL (acronym for "Uniform Resource Locator"), like, for example, "smartcard.com", is carried out during an execution of a portable Internet browser, such as "Firefox^{™}" or the like, by the personal computer 11.

Such a name provides, as such, a means for locating the resource by describing its network location, with a "dummy" Internet server address, instead of the existing remote Internet server address. The personal computer 11 points the TCP/IP smart card 12, instead of the desired remote Internet server. The expression "dummy" Internet server address is used, since the TCP/IP smart card is not directly connected to the Internet network 16 while being able, in a sure manner, to locate the TCP/IP smart card 12 with respect to the personal computer 11. The IP data packets are then exchanged between the personal computer 11 and the TCP/IP smart card 12.

We therefore understand that the personal computer 11 interacts with the TCP/IP smart card 12. Such an interaction is fully transparent to the user, i.e., the user is not aware about the pending operation relating to the interaction.

Optionally, each one of the personal computer 11, as client, and the TCP/IP smart card 12, as local server, uses a mass-storage communication interface, like a USB, MMC, or SD connector, to exchange network data with the other one while implementing the corresponding shared communication protocol. The mass-storage communication protocol is available from the operating system of the personal computer 11. Such an optional technical feature allows to avoid the user to install a network driver and configure the network. The personal computer 11 translates IP data packets to be transported over the corresponding mass-storage protocol. The mass-storage communication protocol implemented allows the personal computer 11, as client, to read and/or write into an Input/output file stored within the memory 123 of the TCP/IP smart card 12.

According to another embodiment, to access the TCP/IP smart card 12, the personal computer 11 translates the IP data packets into another communication protocol, like a proprietary communication protocol, for example the so-called "smartTP" protocol.

It is to be noted that the personal computer 11 is allowed to access the memory 123 of the TCP/IP smart card 12, as local server, while the personal computer 11 is not allowed to access the memory 123 of the TCP/IP smart card 12, as data storage. In other words, the personal computer 11 is only allowed to read and/or write into the memory 124, as client of the portable device, and the memory 123 is not visible from the mass-storage by the user. For example, the personal computer 11, as client, requests for a particular telephone contact to be retrieved within a phone book stored within the TCP/IP smart card 12. The corresponding request is re-directed to the TCP/IP smart card 12, as local server. The TCP/IP smart card 12 responds to the request while transmitting to the personal computer 11, the found telephone contact. Thus, no scan of the memory of the mass-storage has been required, in order to obtain the desired information. The information is therefore given to the client in a dynamic manner.

It is to be noted that the TCP/IP smart card 12 can host many TCP/IP servers, the TCP/IP smart card 12 may thus execute simultaneously many applications while the personal computer 11 may itself execute, in the same time, one or several applications.

Advantageously, the TCP/IP smart card 12 stores one or several Internet client applications, e.g. a portable Internet browser, on its mass-storage file system. The Internet client application is executed on the personal computer 11.

According to an interesting embodiment, as soon as the TCP/IP smart card 12 is connected to the personal computer 11, an interrupt signal is generated that informs the processing of the microprocessor 122 which triggers a launching application, like the portable Internet browser, such as "Firefox^{™}". The execution of the portable Internet browser on the personal computer 11 allows to immediately run, the implementation of the communication protocol stack of the portable Internet browser for the name resolution for certain predetermined Internet server address, like for example "smartcard.com". More exactly, the execution of the portable Internet browser by the personal computer 11 causes to create one (or many) link(s) through a socket library that is dynamically modified with the name for identifying the TCP/IP smart card 12 to be pointed, as local server, instead of any other Internet distant server(s). The name "smartcard.com" is used by the launching application, namely the portable Internet browser, to identify, in a unique manner, the TCP/IP smart card 12.

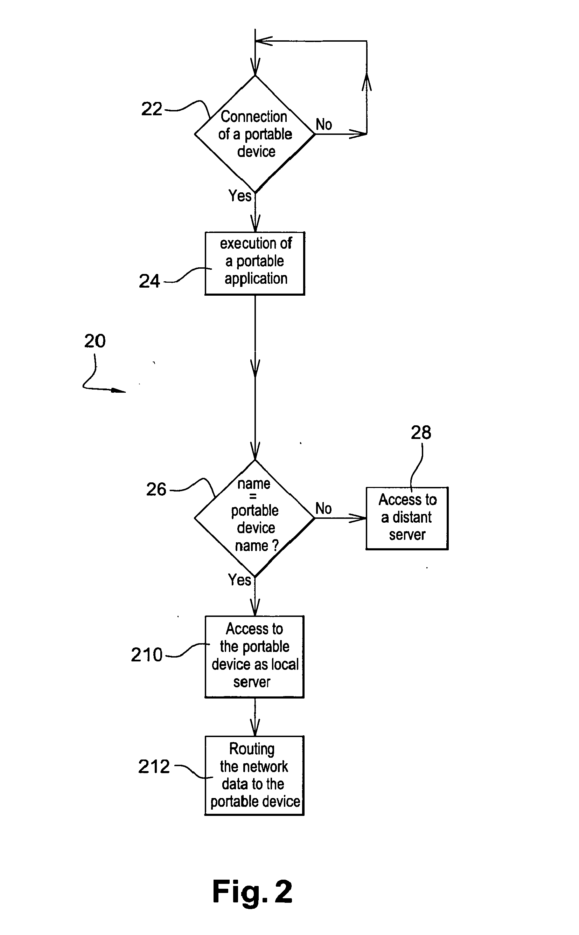

Figure 2 shows an embodiment of the invention method 20 for accessing a server from the personal computer 11, as host device and client, to the TCP/IP smart card 12, as portable device and local server.

Firstly, the TCP/IP smart card 12 checks 22 whether it is connected to the personal computer 11.

As soon as the TCP/IP smart card 12 detects that it is linked to the personal computer 11, then the personal computer 11 is allowed to read a launching application, like a portable TCP/IP application, stored within a memory 124 of the TCP/IP smart card 12.

According to an embodiment, an automatic launching application is executed at an insertion of the TCP/IP smart card 12, e.g. "autorun" feature of its operating system. The automatic launching application launches another launching application, like a portable TCP/IP application, stored within a memory 124 of the TCP/IP smart card 12.

The memory 124 is accessible from the personal computer 11 for its reading, so that the personal computer 11 executes the stored portable TCP/IP application.

According to a variant to the automatic launching step of a launching application, a personal computer user selects a corresponding launching application from a list of available applications stored within the TCP/IP smart card 12, e.g. by double clicking on a corresponding icon.

The personal computer 11 executes 24 the portable TCP/IP application, such as "Firefox (trademark)" or the like. Such an execution is carried out from the TCP/IP smart card 12 that stores the portable TCP/IP application.

It is to be recalled that an operating system of the personal computer 11, such as Windows (trademark), is able to know the originator of the portable TCP/IP application, through a set of system calls well known from the man skilled in the art.

In addition to the operating system built-in name resolution, the portable TCP/IP application can use a specific device name resolution that overrides the operating system name resolution for a set of specific names, in order to access the TCP/IP smart card 12, as local server.

The execution 24 of the portable TCP/IP application stored within the TCP/IP smart card 12 modifies the TCP/IP name resolution of that portable TCP/IP application for only some predetermined IP server address(es), like for instance "smartcard.com", as a TCP/IP smart card identifier. The execution of this modification replaces the IP server address by the "smartcard.com" address, i.e. the address of the TCP/IP smart card connection identifier, for instance by a "dummy" internet address, like "FF.FF.FF.FF", in order to route all the IP data packets to the TCP/IP smart card 12. Such a dummy Internet address allows to identify, in a unique manner, the TCP/IP smart card 12 to be accessed, as local server, instead of any other distant server. The "dummy" internet address is predefined as an identifier of connection to the TCP/IP smart card 12. Thus, the "dummy" internet address is interpreted by the known functions of the socket library modified accordingly so as to recognize it, as the entity that memorizes the portable TCP/IP application and the addressee of the data to be transmitted by the personal computer 11.

To replace or substitute the predetermined IP server address(es), all system call performed by the known functions of the socket library to access an IP server are accordingly modified, to access the TCP/IP smart card 12 while keeping the same interfaces, such as the known functions "gethostbyname(), connect(), send(), receive() and so on", than the ones used for any other remote server.

When a user of the personal computer 11 desires to access any server that has a corresponding server name, the execution of the portable IP browser checks 26 whether the name of the server matches with the predetermined server name to be re-routed to the TCP/IP smart card 12, as portable device.

If the desired server name does not belong to one that has to be re-directed to the TCP/IP smart 12, then the personal computer 11 accesses 210, as known per se, to the desired remote server while using notably the known functions of the socket library. In other words, the known name resolution of the personal computer 11, as client, is not modified for any other remote server, while implementing the TCP/IP protocol stack.

Conversely, when the desired server name corresponds with one predetermined IP server name that has been changed within the functions called by the socket library to be used to access the desired server, the execution of the portable IP browser re-directs 210 the IP data packets to the TCP/IP smart card 12, as local server. Thus, a mechanism is provided that enables the portable TCP/IP application, like a portable browser, to interact directly with the TCP/IP smart card 12, through a dynamic name change, causing a re-direction of the data packets intended to the server.

For example, the user directly types "http://smartcard/login" within the portable Internet browser executed by the personal computer 11, in order to access an application within the TCP/IP smart card 12, as local server.

According to another way of implementation, the user accesses a distant server pertaining to a bank. The distant server presents for example an HTML page. The HTML page includes a reference to the TCP/IP smart card 12, as local server, as an authentication server. The reference to the TCP/IP smart card 12 is, for example "http://smartcard/login", so as to be user-friendly. Thus, the reference to the TCP/IP smart card 12 allows to avoid that the user types some erroneous server name and/or any erroneous portable application name. The portable TCP/IP application is thus accessible and therefore executable by the personal computer 11 without any typing error.

Consequently, the personal computer 11 routes 212 the concerned IP data packets to the TCP/IP smart card 12, to access the corresponding server(s). A connection is then established between the personal computer 11 and the TCP/IP smart card 12. Thus, the TCP/IP smart card 12 is transformed into a server that does not need any intermediary proxy server between its client and itself, as local server. As such, the invention allows a direct and interactive addressing of the TCP/IP smart card 12, from a Web client, without any execution of a proxy server on the personal computer 11. Due to the re-direction of the IP data packets directly to the concerned TCP/IP smart card 12, the personal computer 11 can be connected to several TCP/IP smart cards or similar without having any confuse between them, i.e. only the right TCP/IP smart card is then addressed, since each TCP/IP smart card 12 has its own name resolution, in order to resolve to itself.

The TCP/IP smart card 12 remains the property of its carrier and hosts one or several servers. For example, the TCP/IP smart card 12 hosts an authentication server. The TCP/IP smart card 12 offers an application to authenticate a client of the TCP/IP smart card 12, as server. The client may be only the carrier of the TCP/IP smart card 12.

Preferentially, the TCP/IP smart card 12 publishes a storage interface, like a USB mass-storage interface or the like, that is also accessible from the personal computer 11 without needing any specific driver installation, like some Ethernet driver. Recent operating systems, such as Windows 2000 (trademark) or the like, includes, by default, at least some components, like a USB driver, a SD driver, and/or a MMC driver. The personal computer 11, as client, and the TCP/IP smart card 12, as local server, sharing a common storage interface therefore communicate data without the intervention of the personal computer user.

As to another embodiment, a proprietary transport protocol is to be used necessitating an installation of a specific driver that can be automatically installed from the TCP/IP smart card 12 and/or from a remote server accessible from the personal computer 11, as a communication device, in order to remain user-friendly. In such a case, the user has to have administrative privileges to install a corresponding needed specific driver.

An exchange of IP data packets between the personal computer 11 and the TCP/IP smart card 12 allows to update data related to programs, and/or applications supported by the TCP/IP smart card 12, and/or to parameters for configuring the TCP/IP smart card 12, and/or to a content to be stored within the TCP/IP smart card 12.

The hereinabove described solution has therefore the following advantages:
- no need for a TCP/IP server process on client device, to act as a proxy server, and therefore no need for a dedicated TCP/IP smart card port to listen for any browser connection request, to access the TCP/IP smart card 12;
- no additional TCP/IP stack is used to access the TCP/IP smart card 12;
- neither routing nor IP configuration is required to access the TCP/IP smart card 12, as portable device ;
- multiple TCP/IP smart card 12, as portable devices can be used on the personal computer 11, as host device, without any conflict between the portable devices.

Furthermore, the TCP/IP smart card 12 optionally incorporates any required software application, avoiding installation of any activex/plug-in, like a viewer acrobate reader (trademark).

## Claims

1. A method (20) for accessing a server, said server being accessible from a host device (11), said host device implementing a network communication stark, a portable device (12) being connected to said host device,
**characterized in that** said network communication stack is modified for at least one name resolution for at least one network server address, so that said name resolution allows to point to said portable device, as said server, said host device being able to exchange network data with said portable device.

2. Method according to claim 1, wherein said host device executes a network client application, an execution of said network client application modifying said network communication stack for said name resolution.

3. Method according to claim 2, wherein said host device accesses to a network entity (17), said network entity storing said network client application, said host device storing a launching application, an execution of said launching application launching said network client application.

4. Method according to claim 2, wherein said portable device stores said network client application and a launching application, an execution of said launching application launching said network client application.

5. Method according to claim 4, wherein said network client application is a portable network browser.

6. Method according to any of claims 1 to 5, wherein said host device and said portable device are able to implement at least one and the same communication protocol, said host device and said portable device exchanging network data by using one of said at least one communication protocol.

7. Method according to claim 6, wherein said at least one and the same communication protocol is a mass-storage communication protocol.

8. Method according to claim 6, wherein said at least one and the same communication protocol is a network communication protocol.

9. Method according to any of claims 1 to 8, wherein said network is an Internet network.

10. A system (10) for accessing a server, said server being accessible from a host device (11), said host device comprising means for implementing a network communication stack, a portable device (12) being connected to said host device, said system comprising said host device and said portable device,
**characterized in that** said system (10) is configured to modify a name resolution for at least one network server address while implementing said network communication stack, so that said name resolution allows to point to said portable device, as said server, said host device comprising means for exchanging network data with said portable device.

11. System according to claim 10, wherein said host device comprises means for executing a network client application, an execution of said network client application modifying said network communication stack for said name resolution.

12. System according to claim 11, wherein said host device comprises means for accessing to a network entity, said network entity comprises means for storing said network client application, said host device comprising means for storing a launching application, an execution of said launching application launching said network client application.

13. System according to claim 11, wherein said portable device comprises means (124) for storing said network client application and a launching application, an execution of said launching application launching said network client application.

14. System according to claim 13, wherein said network client application is a portable network browser.

15. System according to any of claims 10 to 14, wherein said host device and said portable device comprises means for implementing at least one and the same communication protocol, said host device and said portable device exchanging network data by using one of said at least one communication protocol.

16. System according to claim 15, wherein said at least one and the same communication protocol is a mass-storage communication protocol.

17. System according to claim 15, wherein said at least one and the same communication protocol is a network communication protocol.

18. System according to any of claims 10 to 17, wherein said network is an Internet network.

19. System according to any of claims 10 to 18, wherein said host device is a mobile phone and said portable device is a TCP/IP smart card.

20. System according to any of claims 10 to 18, wherein said host device is a personal computer and said portable device is a personal token.

21. A portable device (12) for accessing a server, said server being accessible from outside,
**characterized in that** said portable device is configured to modify a name resolution for at least one network server address, so that said name resolution allows to point to said portable device, as said server, said portable device comprising means for exchanging network data with outside.

22. Portable device according to claim 21, wherein said portable device includes a USB connector.

23. Portable device according to claim 21, wherein said portable device includes a MMC connector.

24. Portable device according to claim 21, wherein said portable device includes a SD connector.

25. Portable device according to any of claims 21 to 24, wherein said portable device is a personal token.

26. Portable device according to claim 25, wherein said personal token is a USB mass-storage token.

27. Portable device according to any of claims 21 to 24, wherein said portable device is a TCP/IP smart card.
